# EUROPEAN PATENT APPLICATION

(11) **EP 4 597 190 A1**
(43) Date of publication of application: **06.08.2025**
(21) Application number: 25154649.5
(22) Date of filing: 29.01.2025
(51) Int. Cl.: G02B 7/183, G02B 7/182

(54) **ORIENTABLE MOVEMENT DEVICE FOR LARGE OPTICAL BODIES**

(30) Priority: 02.02.2024 IT 202400002238
(71) Applicant: Officina Stellare S.p.A., 36030 Sarcedo (VI) (IT)
(72) Inventor: GIRARDINI, Marco, Sandrigo (VI) (IT)
(74) Representative: Autuori & Partners S.R.L.

(57) **Abstract**

A device for supporting an optical body (CO), such as a large lens or a mirror, for example weighing 100 - 400 kg, comprising a base framework (10), a rotary support framework (20) including gripping means (21) for the optical body (CO) and first rotary connection means (30) between the base framework (10) and the rotary support framework (20). This allows the mutual rotation around a substantially horizontal axis (X) lying on a first plane (**π1**), so that said rotary support framework (20) moves at least between a first working position in which it lies on the first plane (**π1**) and a second working position wherein the rotary support framework (20) lies on a second plane (**π2**) substantially incident with respect to said first plane (**π1**).

## Description

### Technical field

The present invention generally relates to the technical field of supporting devices for optical bodies, and it particularly relates to an orientable movement device for large optical bodies.

### Definitions

In the present document, the expression "optical body" and derivatives, are used to indicate any element with light beam concentration and/or divergence properties. For example, the expression "optical body" refers to lenses and mirrors.

In the present document, the expression "large" and derivatives referring to an optical body, is used to indicate optical bodies weighing 100 - 400 kg, as well as, if circular-shaped, with diameter equal to 600 - 1000 mm.

### State of the Art

There is known the need to support large optical bodies, for example for carrying out processing operations or optical tests thereon.

However, large optical bodies are rather complex to move, due to their size and weight.

In addition, the movement may lead to the unwanted deformations of such optical bodies.

On the other hand, there are known vertical support devices provided with assembly belts or chains for supporting the optical bodies only used during optical steps and it is therefore extremely limited in use.

### Summary of the invention

An object of the present invention is to at least partly overcome the drawbacks illustrated above by providing a movement device for large optical bodies that is ultra versatile.

Another object of the present invention is to provide a support device for large optical bodies that ensures a particularly stable support thereof.

Another object of the present invention is to provide a support device which allows to facilitate the trial test for large optical bodies.

Another object of the present invention is to provide a support device which allows to easily carry out processing operations on large optical bodies.

Another object of the present invention is to provide a support device which limits the introduction of deformations thereon.

Another object of the present invention is to provide a support device for large optical bodies which allows a positioning thereof that is particularly precise.

A further object of the present invention is to provide a support device for large optical bodies that can be adjusted depending on the size of the optical body.

These and other objects which will be more apparent hereinafter, are attained by a support device as described, illustrated and/or claimed herein.

The dependent claims define advantageous embodiments of the invention.

### Brief description of the drawings

Further characteristics and advantages of the invention will be more apparent in light of the detailed description of a preferred but non-exclusive embodiment of the invention, illustrated by way of non-limiting example with reference to the attached drawings, wherein:
**FIG. 1A** is an axonometric schematic view of the device 1 in the first working position, regarding which **FIGS. 1B** and **1C** are enlargements of some details;
**FIGS. 2A** and **2B** are axonometric schematic views of the device **1** in the second working position;
**FIG. 2C** is a schematic view of a detail of **FIG. 2B**;
**FIG. 3A** is an axonometric schematic view of the device 1 in the first working position, regarding which **FIG. 3B** is the enlargement of a detail;
**FIG. 4** is a schematic view of the rotary movement means **40.**

### Detailed description of some preferred embodiments

With reference to the attached figures, herein described is a device **1** for supporting a large optical body **CO**, for example weighing 100 - 400 kg.

For example, the optical body **CO** may be in the form of a lens or a circular mirror, with diameter measuring 600 - 1000 mm.

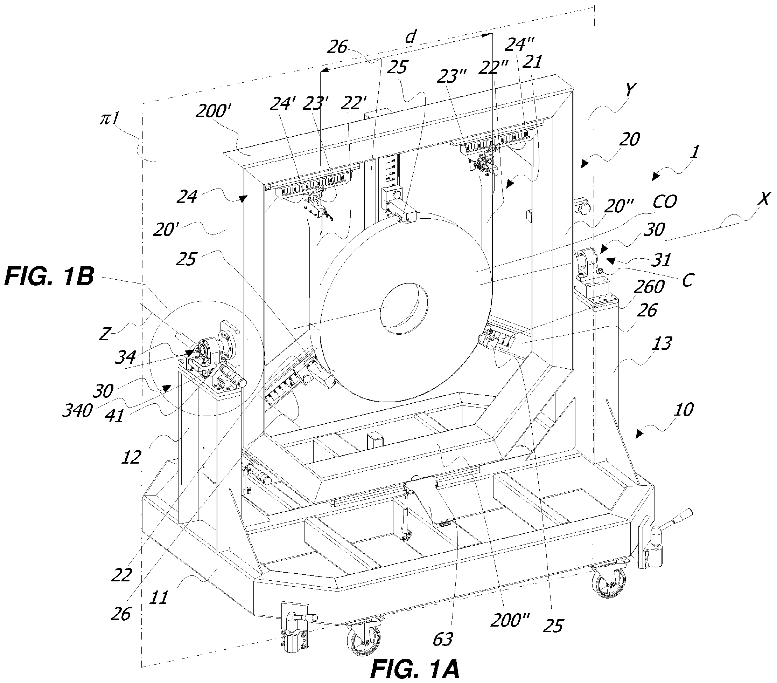

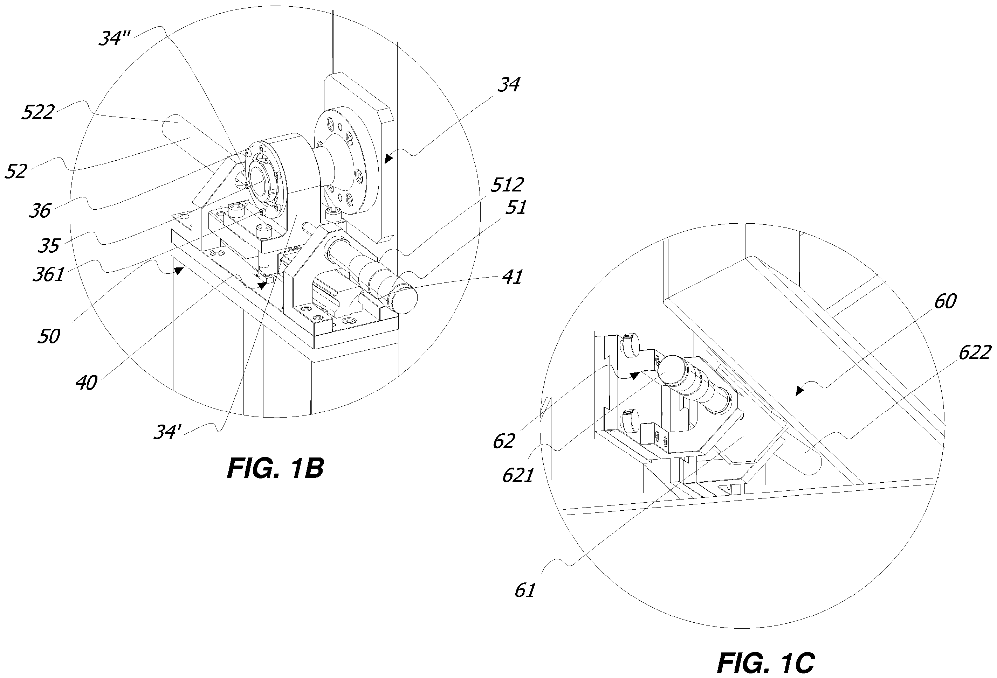

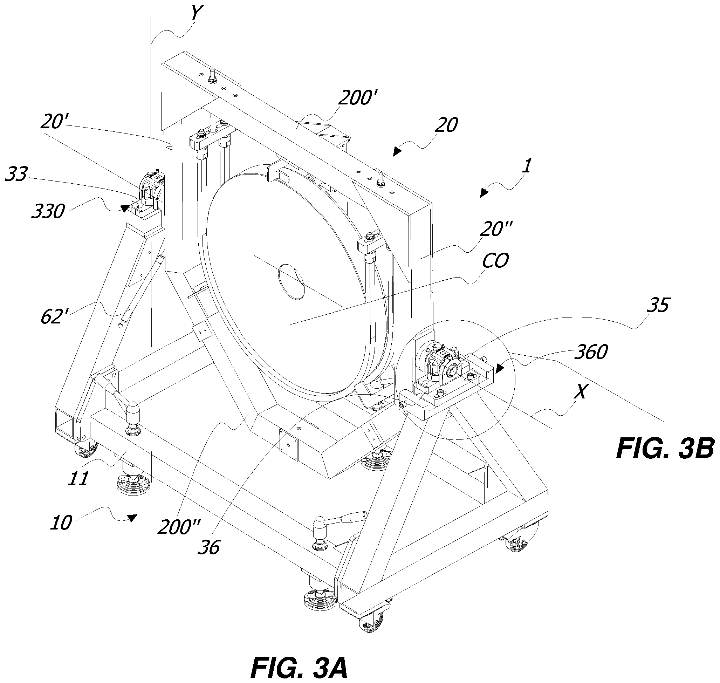

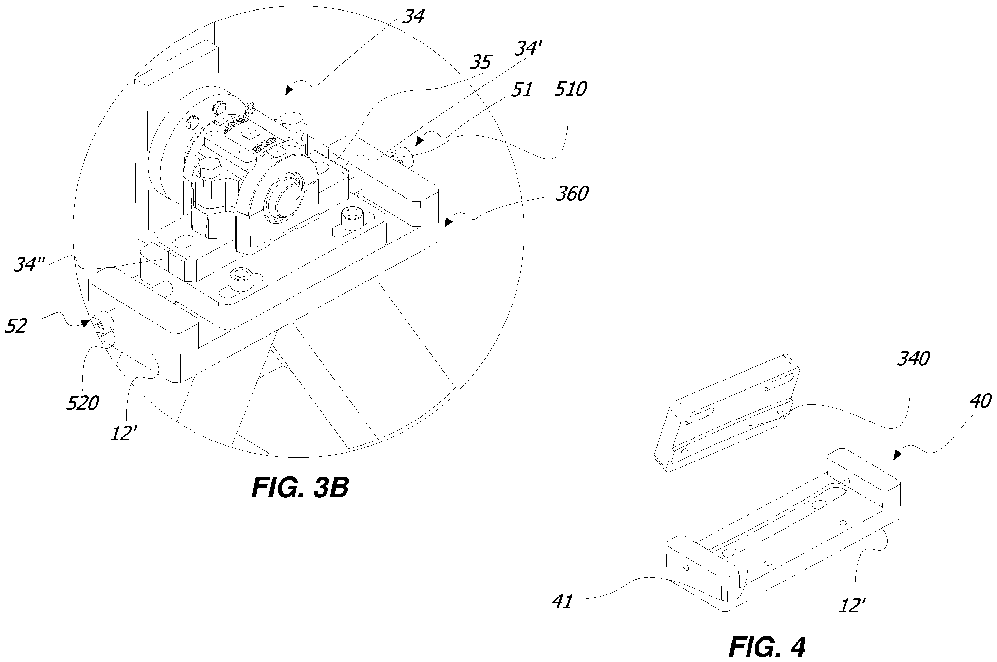

**Figs. 1A** to **2C** and **4** will refer to a second embodiment of the device **1** described below, while figs. **3A**, **3B** and **4** will refer to a first embodiment of the same device **1**, described below.

The device **1** may include a base framework **10**, a rotary support framework **20** and rotary connection means **30** to allow the rotation between the base framework **10** and the rotary support framework **20** around an axis **X** lying on a plane **π1.**

Preferably, the latter may be vertical, or it may coincide with the front plane of the device **1**.

In particular, the rotation may allow the movement of the framework **20** between a first working position in which it lies on the plane **π1** and a second working position, in which the framework **20** lies on an incident plane **π2** with respect to the plane **π1.**

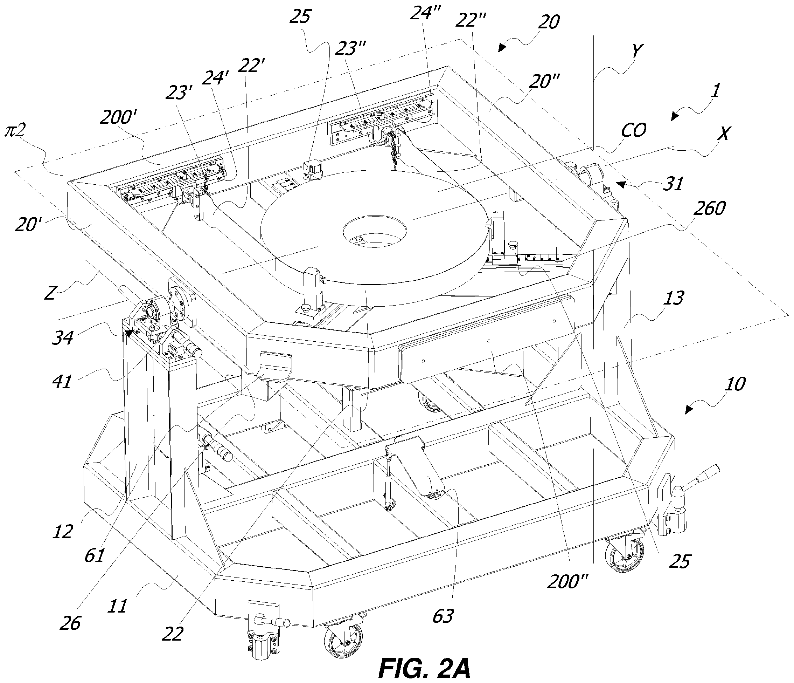

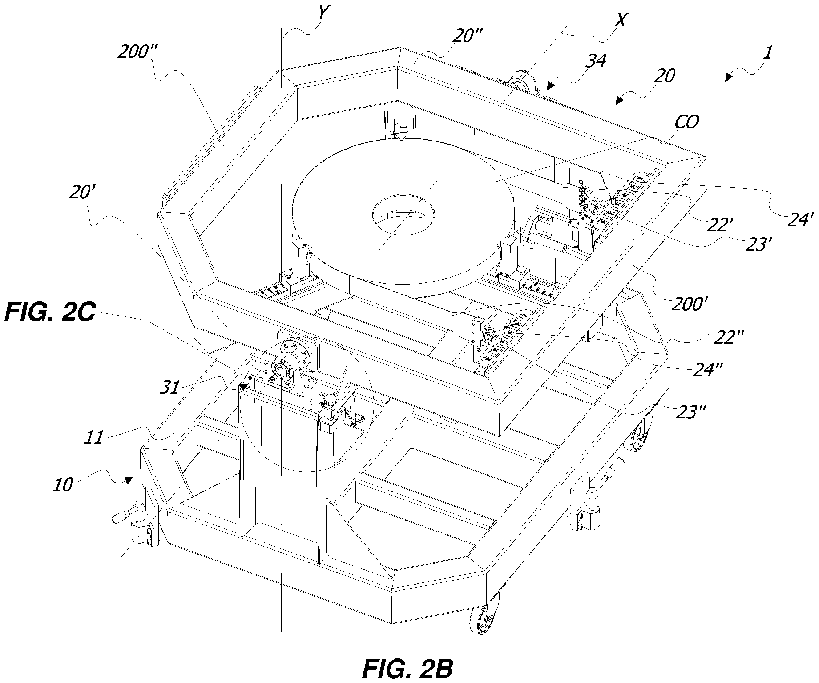

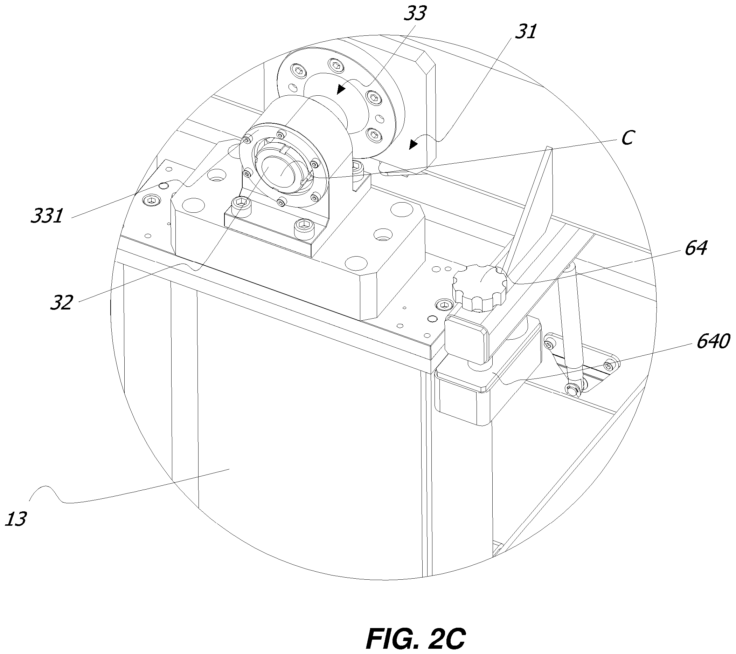

For example, the plane **π2** may coincide with the cross-sectional plane of the device **1** as particularly shown in **fig. 2A****.**

It is clear that the above may identically refer to the first embodiment of **fig. 3A**.

Therefore, the first working position may be particularly useful when carrying out optical tests on the optical body **CO**, while the second working position may be particularly appropriate to perform works on the optical body **CO** as well as for positioning it on the device **1** through per se known special mechanical arms.

In this manner, the device **1** will be ultra versatile.

Suitably, the base framework **10** may be a per se known block, provided with a horizontal base **11** which can be possibly moved using per se known suitable wheels, and with a pair of vertical lateral arms **12** and **13** and positioned in an opposite manner on the base **11**.

Advantageously, the rotary support framework **20** may be a frame having two opposite uprights **20', 20"** and two opposite crosspieces **200', 200".**

For example, the crosspiece **200'** may be positioned at the upper part while the crosspiece **200"** may be positioned at the lower part with respect to the transversal plane of the framework **20.**

Preferably, the latter may include gripping means **21** for the optical body **CO.**

Generally, the gripping means **21** may include one or more winding bodies **22,** preferably one, for at least partially winding around the optical body **CO.**

The winding body **22** may include a portion **22'** and a portion **22",** positioned so that they are facing each other with respect to the median plane of the optical body **CO,** as particularly shown in **fig. 1A****.**

In addition, the winding body **22** may be connected slidably with the framework **20**so as to modulate the distance **d** between the portions **22'** and **22"** as described below.

In a preferred but non-exclusive embodiment, the gripping means **21** may include a belt **22** which may at least partially wind around the optical body **CO** and defining the winding body **22.**

The belt **22** may therefore include a portion **22'** and a portion **22",** positioned so that they are facing each other with respect to the median plane of the optical body **CO,** as particularly shown in **fig. 1A****.**

In different embodiments, the gripping means **21** may include chains or bands which may at least partially wind around the optical body **CO** similarly to the belt**22** and therefore defining the winding body **22**.

Advantageously, the gripping means **21** may further include a pair of ball joints **23'** and **23"** rotatably connected with the framework **20,** for example at the crosspiece **200',** and with the portions **22'** and **22"**, so as to allow an oscillation of the optical body **CO** around axes lying on the plane identified by the framework **20**, therefore around axes perpendicular to the axis **X**.

Such solution may prevent the introduction of deformations on the optical body **CO**.

Suitably, the gripping means **21** may include clamp-like means **25** which in a preferred embodiment may for example be clamps **25** adapted to clamp the optical body **CO** at multiple points, so as to ensure the stability thereof when moving the latter, as will be clearer hereinafter.

Such clamps **25** may be integrally joined with the frame **20,** due to the presence of corresponding arms **26** belonging to the framework **20,** connected to one or more of the uprights **20', 20"** and crosspieces **200', 200"** mentioned above.

Advantageously, the clamps **25** may be slidable along suitable tracks **260,** for example metrically graduated, positioned on the arms **26** so as to adapt the mutual distance between the clamps **25** depending on the size of the optical body **CO.**

Preferably, the framework **20,** for example at the crosspiece **200',** may include a track **24** for sliding the ball joints **23'** and **23",** for example metrically graduated, to adjust the distance d between the portions **22'** and **22"** depending on the size of the optical body **CO.**

It is clear that the track **24** will allow the slidable connection mentioned above between the winding body **22** and the frame **20** so as to modulate the distance **d** between the portions **22'** and **22"**,and therefore the latter may be slidably connected to the track **24** directly or by means of ball joints **23'** and **23",** as described in the attached drawings, or using other appropriate per se known interface means, such as hooks or the like.

In any case, the track **24** will define a sliding track for the portions **22'** and **22".**

Preferably, the track **24** may be made of two parts, that is a first track **24'** at the portion **22'** and a track **24"** at the portion **22".**

According to the example mentioned above, the first track **24'** may be at the ball joint **23',** as well as at the portion **22'** and track **24"** may be at the ball joint **23",** as well as at the portion **22".**

In a preferred but non-exclusive embodiment, the rotary connection means **30** may include a rotary element **31** and a rotary element **34.**

Advantageously, the rotary element **31** may include a rotary pin **32** and a rotary element **33,** while the rotary element **34** may include a rotary pin **35** and a rotary element **36.**

For example, the pins **32** and **35** may be integrally joined with the rotary framework **20,** while the rotary elements **33** and **36** may be integrally joined with the framework **10.**

It is clear that the opposite may also occur, that is the pins **32** and **35** may be integrally joined with the framework **10,** while the rotary elements **33** and **36** may be integrally joined with the **20** without departing from the scope of protection of the attached claims.

Advantageously, the rotatable elements **31** and **34** may be positioned symmetrically with respect to the median plane of the framework **20.**

Preferably, the axis **X** may be of the through type with respect to the rotatable elements **31** and **34,** for example it may extend along the direction defined by the pins **32** and **35.**

Suitably, the rotary element **31** may provide for the through-passing of an axis **Y** perpendicular to the axis **X** so that they define a point of incidence.

The axis **Y** may lie on the plane mentioned above **π1.**

In a preferred but non-exclusive embodiment, the device **1** may include rotary movement means **40** which may allow the rotation of the framework **10** and of the framework **20** around the axis **Y.**

In order to obtain such rotation, for example, the rotary element **33** may be suitable to be oriented, so as to allow a rotation both around the axis **X** and around the axis **Y.**

In this case, the rotary movement means **40** may in turn include the rotary element **33.**

For example, in the first embodiment, shown in **fig. 3A - 3B** and **4**, the rotary elements **33** and **36** may be in the form of a pair of sliding plates **330** and **360,** while in the second embodiment, shown in **fig. 1A** to **2C** and **4**, the rotary element **33** may be in the form of an orientable ball bearing **331** or the like, while the rotary element **36** may be in the form of a ball bearing **361.**

On the other hand, the rotary movement means **40** may include a curved linear guide **41** positioned at the rotary element **34**.

For example, such linear guide **41** may guide the element **34** for a movement on the plane **π2**.

To this end, the element **34** may include a movable body **340** adapted to slide along the guide **41**.

It is clear that the rotary movement means **40** may therefore also include the movable body **340.**

In this case, the point of incidence between the axes **X** and **Y** mentioned above may define a rotation centre C for the curvature of the linear guide **41.**

Suitably, the device 1 may include adjustment means **50** with a counteracting element **51** and a counteracting element **52** acting on rotary movement means **30** and **40.**

For example, the rotary element **34** may be interposed between the counteracting elements **51** and **52** so that it has a face **34'** in contact with the counteracting element **51** and an opposite face **34"** susceptible to impact the counteracting element **52.**

For example, the counteracting elements **51** and **52** may impact the faces **34'** and **34"** at the movable body **340.**

For example, the counteracting elements **51** and **52** may slide along an axis **Z** perpendicular to the axis **X** and lying on the plane **π2.**

Preferably, the element **51** may include an adjustment screw which may lie on the face **34'**.

In the first embodiment, particularly shown in **fig. 3B**, such adjustment screw may be in the form of a known threaded screw **510** provided with a gripping element which can be screwed into a counter-threaded nut screw, for example obtained in an end portion **12'** of the arm **12** of the framework **10.**

In the second embodiment, particularly shown in **fig. 1B**, such adjustment screw may be part of a per se known micrometre **512**.

On the other hand, in the first embodiment, the counteracting element **52** may include an adjustment screw which may lie on the face **34"**.

Such adjustment screw may be in the form of a known threaded screw **520** provided with a gripping element which can be screwed into a counter-threaded nut screw, for example obtained on the frame **10** in the opposite position with respect to the nut screw.

Therefore, the actuation of one or the other screw **510** or **520** in non-matching directions along the axis **Z**, will cause the movement of the rotary element **34** on the plane **π2.**

It is clear that the adjustment means **50** may therefore also include the counter-threaded nut screw.

In the second embodiment, the counteracting element **52** may include a pre-loaded spring **522** which may lie on the face **34**".

This means that when adjusting the micrometre **512**, the rotary element **34** will automatically move along the linear guide **41** once driven by the spring, both in one and in the other direction on the plane **π2.**

Such adjustment means **50** may therefore allow a precise adjustment of the position of the framework **20,** in particular in the rotation around the axis **Y.**

Suitably, in order to ensure that the working positions are locked, the device **1** may include suitable stop means **60.**

For example, in the first embodiment mentioned above, the stop means **60** may be in the form of a thrust element **62',** for example a gas spring, acting on the framework **20** for moving it between the start and end-of-stroke positions, at the working positions.

On the other hand, in the second embodiment, the stop means **60** may include a tab **61** integrally joined with the framework **20** and a thrust element **62** integrally joined with the framework **10.**

For example, the thrust element **62** may be in the form of described above relating to the counteracting element **52** and therefore it may be in the form of an adjustment screw, for example part of a micrometre **621,** and in the form of a counteracting pre-loaded spring **622.**

It is clear that the tab **61** may therefore remain interposed between the micrometre **621** and the pre-loaded spring **622** so as to allow the adjustment of the angle of incidence between the planes **π1** and **π2.**

On the other hand, in order to move the framework **20** in the first working position, the tab **61** may be fully released from the thrust element **62** by mutually moving away the micrometre **621** and the pre-loaded spring **622.**

In addition, in order to maintain the framework **20** in the first working position, the latter may include a stop element **64**, for example in the form of a knob, which interacts with a counter-stop element **640**, for example a seat for a knob, obtained in the framework **10**.

However, it is clear that also the contrary may occur, that is the framework **20** may be provided with a counter-stop element and the framework **10** may be provided with a stop element **64** without departing from the scope of protection of the attached claims.

Advantageously, the stop means **60** may include a further stop mechanism **63** integrally joined with the framework **10** and which interacts with the framework **20** to cooperate with the thrust element **62** so as to keep the framework **20** in the second working position.

For example, such stop mechanism **63** may include a tab positioned on the base 11 of the framework **10** and which interacts with the crosspiece **200"** of the framework **20** in a per se known manner.

The present invention may include various parts and/or similar or identical elements. Unless otherwise specified, similar or identical parts and/or elements will be indicated using a single reference number, it being clear that the described technical characteristics are common to all similar or identical parts and/or elements.

The invention is susceptible to numerous modifications and variants, all falling within the scope of protection of the attached claims. All details can be replaced by other technically equivalent elements, and the materials can be different depending on the needs, without departing from the scope of protection of the invention defined by the attached claims.

## Claims

1. A support device for an optical body (**CO**), such as a large lens or a mirror, for example weighing 100- 400 kg, comprising:
- a base framework (**10**);
- a rotary support framework (**20**) including gripping means (**21**) for the optical body (**CO**), the latter and said rotary support framework (**20**) being substantially coplanar;
- rotary connection means (**30**) between said base framework (**10**) and said rotary support framework (**20**) to allow the mutual rotation thereof at least around a first substantially horizontal axis (**X**) lying on a first plane (**π1**), so that said rotary support framework (**20**) moves at least between a first working position wherein the rotary support framework (**20**) lies on said first plane (**π1**) and a second working position wherein said rotary support framework (**20**) lies on a second plane (**π2**) substantially incident with respect to said first plane (**π1**).

2. Device according to the preceding claim, wherein said rotary connection means (**30**) include at least one first and one second rotary element (**31**, **34**), each including at least one respective rotary pin (**32**, **35**) and at least one rotary element (**33**, **36**) interacting with each other so as to allow the rotation of said rotary support framework (**20**) at least around said first axis (**X**), said rotary support framework (**20**) including one of said at least one rotary pin (**32**, **35**) and at least one rotary element (**33**, **36**), said base framework (**10**) including the other of said at least one rotary pin (**32**, **35**) and at least one rotary element (**33**, **36**).

3. Device according to the preceding claim, wherein said at least one first and one second rotary element (**31**, **34**) are positioned on said base framework (**10**) and on said rotary support framework (**20**) in a substantially symmetrical manner with respect to the median plane of the latter.

4. Device according to any one of the preceding claims, further comprising rotary movement means (**40**) to allow the mutual rotation of said base framework (**10**) and said rotary support framework (**20**) around a second axis (**Y**) substantially vertical and substantially incident with respect to said first axis (**X**), the second axis (**Y**) lying on said first plane (**π1**).

5. Device according to the preceding claim, wherein said second axis (**Y**) substantially passes through at one of said at least one first and second rotary element (**31**) so that the point of incidence between said first and second axis (**X, Y**) defines a centre of rotation (C).

6. Device according to the preceding claim, wherein said at least one rotary element (33) of said one of said at least one first and second rotary element (31) can be oriented to allow the rotation of said rotary support framework (20) around said second axis (**Y**), said rotary movement means (40) including said at least one rotary element (33) which can be oriented and at least one curved linear guide (41), the latter being positioned at said other of said at least one first and second rotary element (34) to move the latter along the curved linear guide (41), the centre of curvature of said at least one curved linear guide (41) being substantially coincident with said centre of rotation (C).

7. Device according to the preceding claim, further comprising adjustment means (50) mutually interacting with said rotary connection means (**30**) and/or with said rotary movement means (**40**) to adjust their movement, said adjustment means (**50**) including at least one first and one second counteracting element (**51**, **52**) integrally joined with said other of said base framework (**10**) and support framework (**20**) and slidable in a matching direction on said second plane (**π2**), said other of said at least one first and second rotary element (**34**) being interposed in contact between said at least one first and one second counteracting element (**51**, **52**) so that the sliding of the latter entails the rotary movement of said other of said at least one first and second rotary element (**34**) along said curved linear guide (**41**).

8. Device according to the preceding claim, wherein said at least one first counteracting element (**51**) includes one first adjustment screw (**510**, **512**) lying on a first face (**34**') of said other of said at least one first and second rotary element (**34**), said second counteracting element (**52**) including a second adjustment screw (**520**) or at least a pre-loaded spring (**522**) lying on a second face (**34**") of said other of said at least one first and second rotary element (**34**) opposite to said first face (**34**').

9. Device according to any one of the preceding claims, wherein said gripping means (**21**) include at least one winding body (**22**) configured to at least partially wind around said optical body (**CO**) so that at least one first portion (**22**') of said at least one winding body (**22**) and at least one second portion (**22**") of the latter are substantially facing with respect to the median plane of the optical body (**CO**), said at least one winding body (**22**) being mutually connected slidably with said rotary support framework (**20**) to modulate the mutual distance (**d**) between said at least one first and one second portion (**22'**, **22"**) depending on the size of the optical body (**CO**).

10. Device according to the preceding claim, wherein said winding body (**22**) is a belt or at least one chain or at least one band (**22**) at least partially winding around said optical body (**CO**) so that at least one first portion (**22'**) or said at least one belt or at least one chain or at least one band (**22**) and at least one second portion (**22"**) of the latter are substantially facing with respect to the median plane of the optical body (**CO**), said at least one belt or at least one chain or at least one band (**22**) being mutually connected slidably with said rotary support framework (**20**) in order to modulate the mutual distance (**d**) between said at least one first and one second portion (**22'**, **22"**) depending on the size of the optical body (**CO**).

11. Device according to claim 9 or 10, wherein said gripping means (**21**) further include at least one first and one second ball joint (**23**', **23"**) respectively connected with said at least one first portion (**22'**) and said at least one second portion (**22"**), to allow the rotation of the latter around axes perpendicular to said first axis (**X**).

12. Device according to any one of claims 9 to the preceding one, wherein said rotary support framework (**20**) includes at least one track (**24**) for sliding said at least one first and one second portion (**22'**, **22"**) so as to modulate the mutual distance (**d**) between them depending on the size of the optical body (**CO**).

13. Device according to the preceding claim, wherein said at least one track (**24**) is made of two parts, there being provided for a first track (**24'**) at said first portion (**22'**) and a second track (**24"**) at said second portion (**22'**).

14. Device according to any one of the preceding claims, wherein said gripping means (**21**) include a clamp-like means (**25**) adapted to clamp the optical body (**CO**) integrally joined with said rotary support framework (**20**), the latter including corresponding arms (**26**) for integrally connecting with said clamp-like means (**25**).

15. Device according to the preceding claim, wherein said arms (**26**) include respective sliding tracks (**260**) along which said clamp-like means (**25**) are slidable so as to adapt the mutual distance of the clamp-like means (**25**) depending on the size of the optical body (**CO**).
